**Europäisches Patentamt**

**European Patent Office**

**Office européen des brevets**

(19)

(11) Numéro de publication: **0 029 773**
**B1**

## (12) FASCICULE DE BREVET EUROPEEN

(45) Date de publication du fascicule du brevet: **15.02.84**

(51) Int. Cl.³: **F 02 K 1/00**

(21) Numéro de dépôt: **80401626.9**

(22) Date de dépôt: **13.11.80**

(54) Tuyère orientable pour propulseur à réaction.

(30) Priorité: **23.11.79 FR 7929208**

(43) Date de publication de la demande:
**03.06.81 Bulletin 81/22**

(45) Mention de la délivrance du brevet:
**15.02.84 Bulletin 84/7**

(84) Etats contractants désignés:
**DE FR GB**

(56) Documents cités:
**DE - A - 2 639 474**
**DE - B - 1 192 058**
**FR - A - 2 199 578**
**FR - A - 2 408 037**
**US - A - 3 390 899**
**US - A - 3 504 903**
**US - A - 3 696 999**

Le dossier contient des informations techniques présentées postérieurement au dépôt de la demande et ne figurant pas dans le présent fascicule.

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Bouiller, Jean Georges**
**10, rue Kléber**
**F-91800 Brunoy (FR)**
Inventeur: **Joubert, Raymond Jean Maurice**
**1 allée Gustave Courbet Domaine de Grand Vaux**
**F-91600 Savigny sur Orge (FR)**
Inventeur: **Pous, Jacques André Jean**
**452, avenue Marché Marais**
**F-77350 Le Mee Sur Seine (FR)**

(74) Mandataire: **Moinat, François et al,**
**S.N.E.C.M.A. Service des Brevets Boîte Postale 81**
**F-91003 Evry Cedex (FR)**

Courier Press, Leamington Spa, England.

Tuyère orientable pour propulseur à réaction

L'invention concerne une tuyère orientable pour propulseur à réaction comportant une partie fixe solidaire du propulseur sur laquelle s'articule une partie pivotante, des moyens d'étanchéité disposés entre les deux parties, des vérins de commande de déplacement de la partie pivatante et un dispositif d'orientation multidirectionnelle comprenant des éléments élastiques séparés disposés entre la partie fixe et la partie pivotante de la tuyère, chaque élément élastique présentant deux extrémités sensiblement parallèles.

Les critères d'agilité exigés des avions d'arme modernes imposent parfois à l'avoinneur de recourir à des moyens autres que les gouvernes aérodynamiques pour obtenir des changements d'assiette rapides.

L'un des moyens les plus efficaces est de munir le réacteur d'une tuyère orientable qui permet d'obtenir selon la composante de déviation choisie, soit un dérapage latéral de l'appareil, soit un cabré rapide sans augmentation corrélative de la traînée due au cabrage des élevons. Toutefois, les tuyères orientables sur tous les axes nécessitent soit une double articulation, soit une articulation simple et une liaison rotative. Ces dispositifs sont encombrants et posent des problèmes d'étanchéité délicats.

Le brevet des Etats-Unis d'Amérique n° 3 182 452 donne une réalisation simple et relativement peu encombrante d'une tuyère pour fusée. La sortie de la chambre détermine une large portée sphérique contre laquelle vient glisser une portée sphérique correspondante prévue sur la tuyère. L'étanchéité est assurée par un joint torique creux présentant une section circulaire ouverte, les bords de la section étant fixés sur la chambre et la tuyère. La rotation de la tuyère est obtenue par quatre vérins disposés selon des diamètres perpendiculaires de la chambre et de la tuyère.

Le brevet US—A—3 390 899 montre également une tuyère orientable pour fusée comportant une partie fixe sur laquelle s'articule une partie pivotante. Un élément élastique annulaire continu interposé entre un anneau solidaire du canal fixe et une surface sphérique liée à la tuyère mobile forme un joint flexible. Cet anneau constitué par un empilage de feuilles élastomères et de métal adhèrant les unes aux autres ne permet cependant qu'une souplesse limitée car il est solidaire sur tout son pourtour à la fois de la partie fixe et de la partie mobile.

On connaît d'autre part par le brevet US—A—3 504 903 une tuyère pour fusée dans laquelle des éléments élastiques séparés relient la partie fixe et la partie mobile. Une telle disposition, dans laquelle chaun des éléments élastiques est solidiare à la fois de la partie mobile et de la partie fixe, ne permet pas non plus la souplesse désirable pour une tuyère de propulseur d'aviation car les éléments élastiques travaillent également en cisaillement comme dans les dispositions utilisant un élément élastique continu.

La forme et la dimension de la sortie de la chambre permettent un maintien et un centrage correct de la tuyère, ce qui n'est pas le cas des propulseurs de tuyères d'avion où les diamètres de la tuyère fixe et de la tuyère mobile sont sensiblement égaux.

L'invention vise à réaliser une tuyère orientable simple et peu eoncombrante et dont le centrage est automatiquement réalisé par suite de la conception de son dispositif d'orientation.

La tuyère orientable, selon l'invention, est remarquable en ce que lesdits éléments élastiques séparés, dont la plus grande dimension s'étend sensiblement transversalement à l'axe du propulseur, sont disposés par paires, au nombre d'au moins trois et uniformément réparties à la périphérie de la tuyère, une des extrémités des éléments élastiques de chaque paire étant solidaire d'un anneau de liaison intermédiaire indépendant des parties fixe et mobile, de l'autre extrémité de chacun des deux éléments élastiques de chaque paire étant fixée respectivement à la partie fixe et à la partie moile de la tuyère, l'ensemble des paires d'éléments élastiques déterminant une articulation déformable constituée sensiblement par deux plans d'éléments élastiques contenant leur dite plus grande dimension et dont le premier est fixé sur la partie fixe et le second sur la partie pivotante de la tuyère.

Les explications et figures données ci-après à titre d'exemple permettront de comprendre comment l'invention peut être réalisée.

— la figure 1 est une coupe longitudinale partielle d'une tuyère orientable de propulseur, selon un premier exemple de réalisation de l'invention, l'axe de la tuyère orientable étant dans l'axe du propulseur;
— la figure 2 est une coupe longitudinale partielle d'une tuyère orientable dans une position telle que le jet est dévié vers le bas;
— la figure 3 est une coupe longitudinale partielle d'une tuyère orientable dans une position telle que le jet est dévié vers le haut;
— la figure 4 est une demi-coupe partielle selon IV—IV de la figure 1;
— la figure 5 est une coupe longitudinale partielle d'une tuyère orientable de propulseur selon un second exemple de réalisation de l'invention, l'axe de la tuyère orientable étant dans l'axe du propulseur;
— la figure 6 est une coupe longitudinale partielle selon ce second mode de réalisation dans une position telle que le jet est dévié vers le bas;
— la figure 7 est une coupe longitudinale partielle selon ce second mode de réalisation

**0 029 773**

dans une position telle que le jet est dévié vers le haut;
— la figure 8 est une demi-coupe partielle selon VIII—VIII de la figure 5;
— les figures 9a, 9b, 9c, montrent en vue de détail les configurations prises par la membrane annulaire d'étanchéité, coupée par un plan longitudinal, dans les différentes positions de la tuyère mobile représentée aux figures 5, 6 et 7.

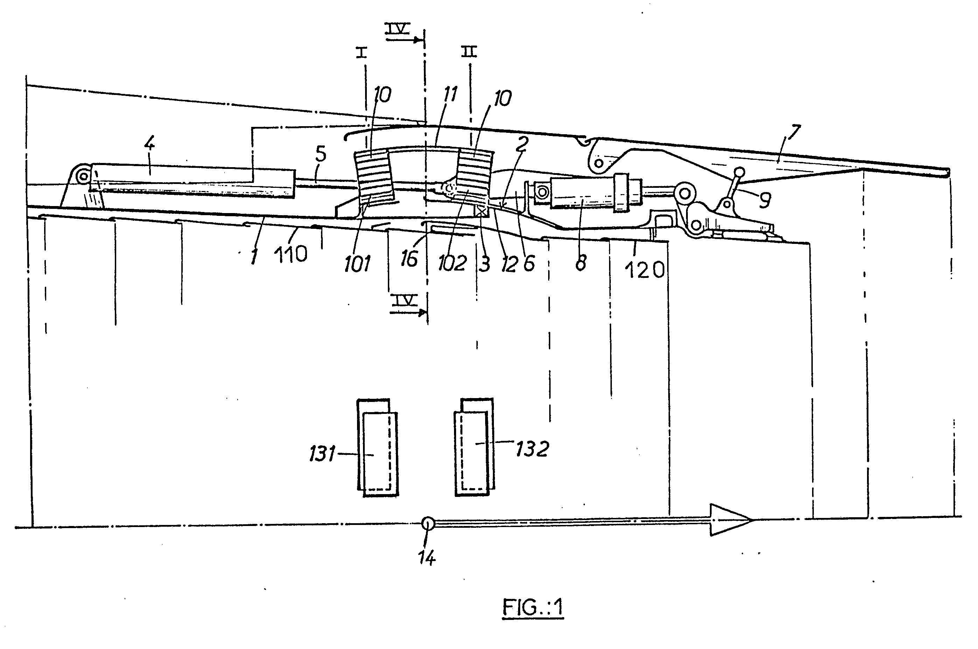

La figure 1 montre une coupe partielle d'une tuyère orientable selon un exemple de réalisation de l'invention. Le moteur à réaction ou propulseur, non représenté, est prolongé par une tuyère dont une partie 1, ou canal d'éjection, est fixe, et une partie 2 pivotante. Des moyens d'étanchéité 3 et 16 sont disposés entre la partie pivotante 2 et la partie fixe 1. La partie pivotante est orientée au moyen de vérins de déplacement 4 dont le corps est monté sur la partie fixe 1 de la tuyère, tandis que les tiges 5 des vérins coopérant avec des prolongements 6 fixés directement ou indirectement sur la partie pivotante 2. Dans la réalisation représentée, la tuyère est équipée d'un dispositif de modification de la section du jet dont un volet 7 est représenté. Ce volet est lui-même commandé indépendamment de la partie pivotante par des vérins 8 et des biellettes 9. Les prolongements 6 de la poutre, portant les vérins 8, fixée à la partie pivotante 2 de la tuyère, portent un axe sur lequel s'articule l'extrémité des tiges de vérins 4. Le dispositif d'orientation multidirectionnel, selon une caractéristique de l'invention, est constitué d'éléments élastiques 10, Ces éléments élastiques sont groupés par deux, aux extrémités d'une virole intermédiaire 11. Les extrémités libres sont respectivement fixés sur la partie fixe 1 et la partie pivotante 2 de la tuyère. Des ensembles, tels que décrits, sont uniformément répartis à la circonférence de la tuyère. Trois ensembles répartis à 120° sont suffisants pour assurer le maintien et le centrage de la partie pivotante 2 par rapport à la partie fixe 1.

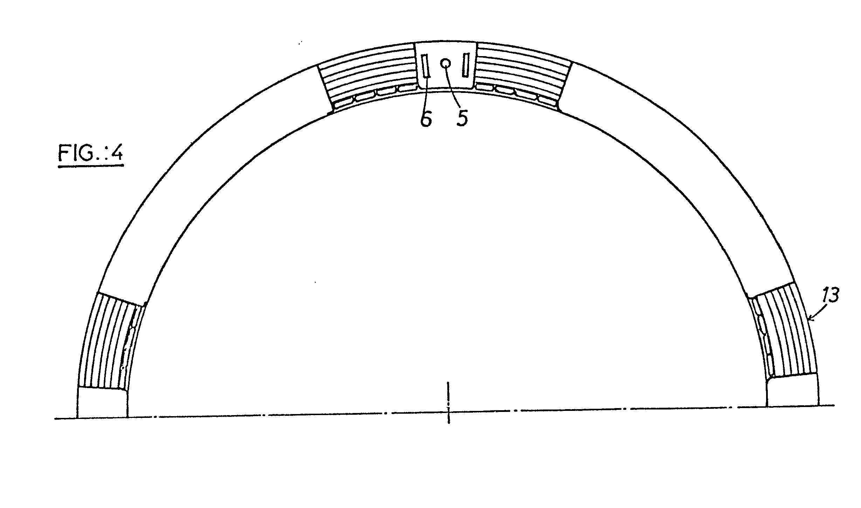

Selon la forme de réalisation représentée, on a disposé quatre doubles ensembles d'élémentes élastiques, dont la figure 4 donne la disposition approximative. Chaque vérin de commande est associé à un tel double ensemble et est disposé dans un plan diamétral de la tuyère, équidistant de chaque ensemble.

Le dispositif d'orientation multidirectionnel forme une articulation déformable constituée par deux plans I et II d'éléments élastiques (figure 1) dont la première rangée selon I est fixée sur le canal d'éjection 1 et la deuxième rangée selon II, est fixée sur la partie mobile 2.

Les axes de symétrie des éléments élastiques 101 et 102 d'un ensemble se coupent en un point situé sur l'axe moteur. La figure 1 montre les éléments 131 et 132 de l'ensemble 13 de la figure 4.

Selon la forme de réalisation représentée aux figures 1 à 4, les moyens d'étanchéité comportent une bague 3 en forme de zone sphérique appartenant au pourtour de l'extrémité de la partie fixe et coopérant avec le bord 12 sphérique de la partie 2. La face de la bague et le bord sphérique ont les mêmes rayon et centre de courbure.

En outre, on a figuré en 16 un moyen d'étanchéité complémentaire, constitué para une lame annulaire métallique recourbée en U portée par le bord extrême de la chemise 110 du canal de la partie fixe, venant en appui élastique et glissant sur la chemise 120 du canal de la partie mobile. Ce moyen est destiné à préserver l'alimentation des films de refroidissement de la chemise.

D'autres moyens d'étanchéité pourraient être interposés entre la partie fixe et mobile de la tuyère, soit en alternative, soit en complément à ceux illustrés ici. Un exemple de ces moyens d'étanchéité complémentaires sera d'ailleurs développé à l'occasion de la description du seconde mode de réalisation.

L'articulation élastique réalisée par les doubles ensembles centre parfaitement la partie pivotante 2 sur la partie fixe 1 qui reprend toutes les charges transversales.

Les charges axiales, par example la traînée de la tuyère, sont reprises par les quatre vérins 4 (un seul est représenté) dont les tiges 5 passent entre les éléments élastiques et sont fixés sur les prolongements 6 des poutres soutenant les vérins 8 de la manière précédemment décrite.

Selon une forme de réalisation préférée, les vérins 4 sont des vérins à vis qui permettent un positionnement précis de la partie sphérique pivotante 2 de la tuyère autour de son centre 14.

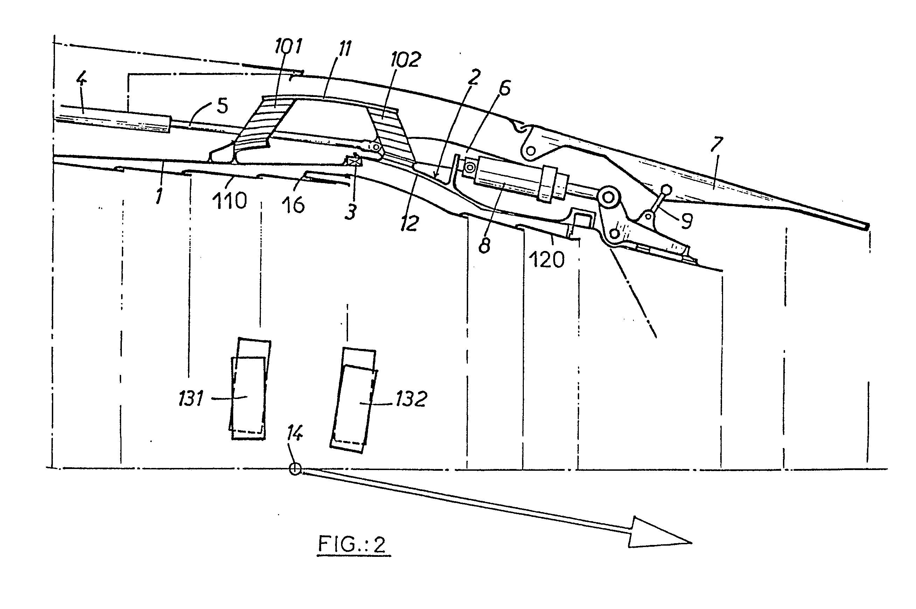

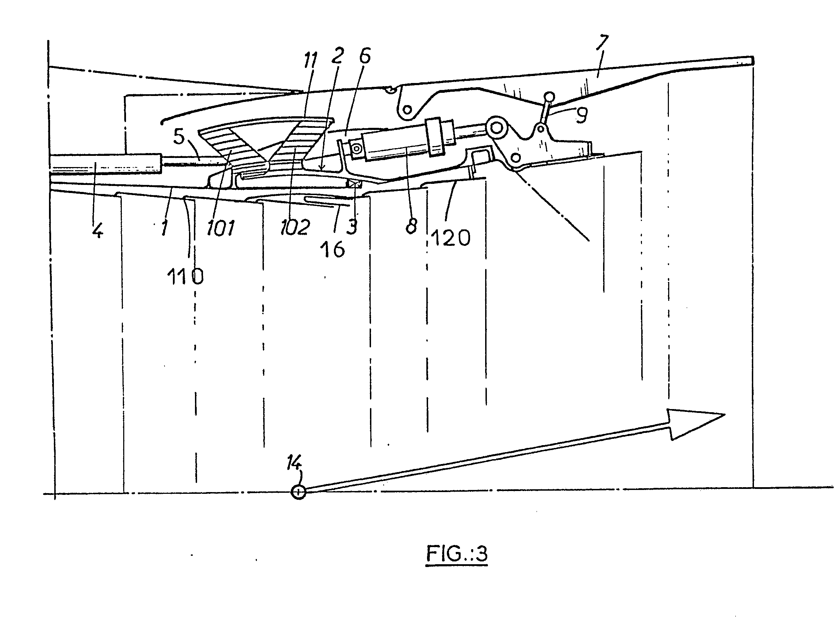

Les figures 2 et 3 montrent le dispositif d'orientation multidirectionnel pour une déviation du jet vers le bas ou vers le haut. L'ensemble d'éléments élastiques 101, 102 subit une déformation dans laquelle les extrémités fixées sur le canal d'éjection 1 et la partie mobile 2, s'écartent. Les ensembles diamétralement opposés subissent une contrainte qui a pour effet de rapprocher les extrémités. Les ensembles disposés à 90° 131 et 132 de l'ensemble 13 subissent une torsion représentée sur la figure 2.

La figure 3 montre la déformation de l'ensemble 101—102. L'ensemble diamétralement opposé subit une déformation contraire, c'est-à-dire un écartement en tout point semblable à celui des éléments 101—102 de la figure 2. La déformation des éléments dans des plans radiaux n'a pas été représentée, celle-ci étant aisément déductible de la représentation des éléments 131—132 de la figure 2, les torsions s'exerçant à l'inverse.

Les éléments élastiques sont constitués, selon une forme de réalisation, de plaques de caoutchouc et d'alliage léger empilées, vulcanisées de façon que le caoutchouc adhère parfaitement au métal. Ces composants sont choisis de manière que leur résistance thermique soit supérieure à la température régnant dans l'environnement de la tuyère. Ils se présentent sous forme de portions de secteur cylindrique.

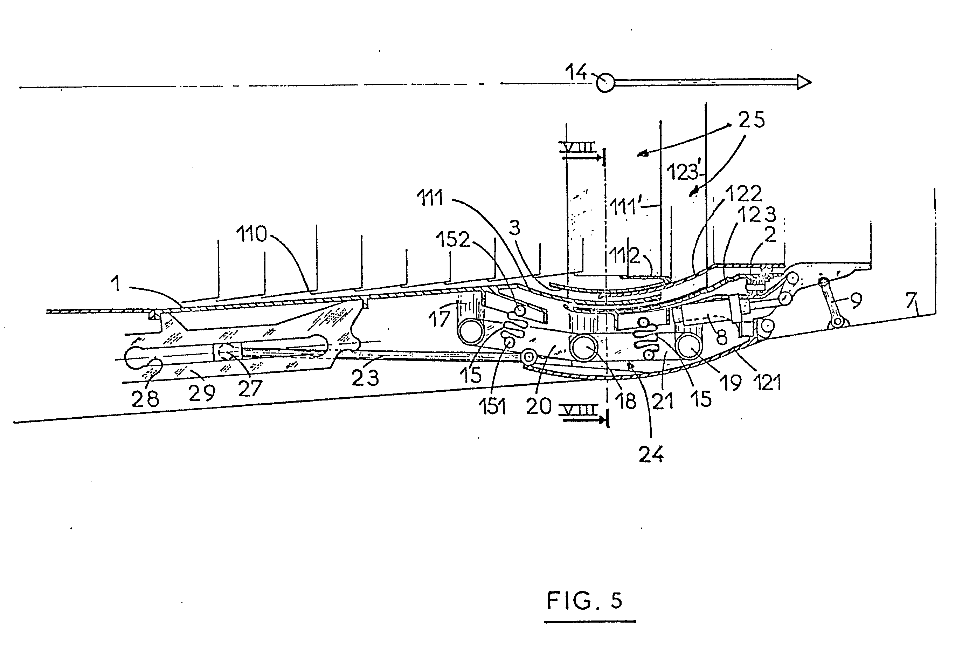

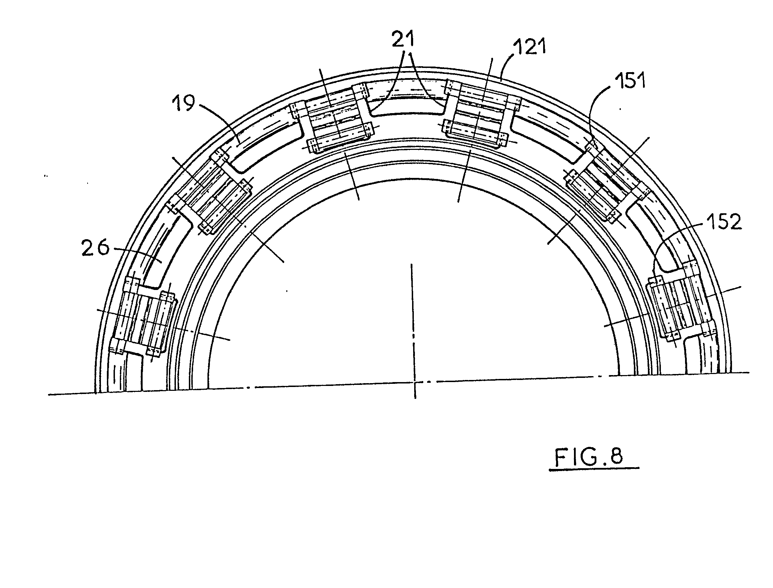

On a représenté sur les figures 5 à 8 un second mode de réalisation dans lequel les éléments élastiques sont constitués par des lames métalliques ondulées 15. Ces lames élastiques sont groupées par 2, reliées par un board d'extrémité à un anneau de liaison intermédiaire 24. Les extrémités libres sont respectivement fixées sur la partie fixe 1 et la partie pivotante 2 de la tuyère. Ces paires d'éléments élastiques sont uniformément réparties sur la circonférence de la tuyère comme le montre la figure 8. L'anneau intermédiaire de liaison 24 présente la forme d'une "cage d'écureuil" et est constitué dans l'exemple représenté, par trois anneaux 17, 18, 19, dont les plans sont parallèles, réunis par des entretoises telles que respectivement 20, 21. Les points d'attache 151 ou jumelles des éléments élastiques sur l'anneau intermédiaire sont situés dans la partie intermédiaire des entretoises respectivement 20 et 21. Les points d'attache des éléments élastiques sur la partie fixe et la partie mobile de la tuyère ont été repérés en 152. Dans l'exemple représenté, on a choisi pour l'anneau 17 un diamètre légèrement inférieur à celui des anneaux 18 et 19 de manière à conférer à l'anneau intermédiaire une forme générale arrondie, en coquille.

Dans la configuration de la figure 5, les plans d'extension générale des lamelles élastiques convergent vers l'axe de la tuyère. Le pas des ondulations est choisi de manière appropriée en fonction des contraintes imposées aux déplacements de la tuyère.

On a choisi dans l'illustration de ce second mode de réalisation de placer les points d'attache des tiges 23, assurant l'orientation de la tuyère, sur un prolongement externe 121 de la partie pivotante 2 de la tuyère.

Cette disposition offre l'avantage d'articuler les tiges 23 sur la partie amont de la partie 2 donc de rendre plus aisé le passage des tiges et de faire passer les efforts par l'enveloppe externe de la partie mobile.

Dans la même préoccupation de réduire les efforts en flexion des tiges de vérins, le mode de réalisation représenté aux figures 5, 6 et 7 montre que le point d'articulation 27 des tiges 23 sur l'actuateur ou vérin peut coulisser dans une rainure 28 pratiquée dans un flasque rigide 29 solidaire de la partie fixe 1.

Des moyens d'étanchéité équipent la tuyère. Ils sont constitués ici, d'une part, par une bague présentant une surface d'étanchéité sphérique 3 portée par le pourtour extrême 112 de la chemise interne 110 du canal d'éjection et coopérant avec le bord interne extrême 122 de la partie mobile 2 et, d'autre part, par une membrane annulaire 25.

Cette membrane annulaire d'étanchéité 25 est repliée suivant une ondulation fermée du côté amont. L'un de ses flancs 111' est fixé sur le prolongement 111 de l'extrémité de la partie fixe 1 de la tuyère, l'autre flanc 123' est solidarisé sur au moins une partie de s largeur du prolongement interne 123 de la partie pivotante 2 de la tuyère.

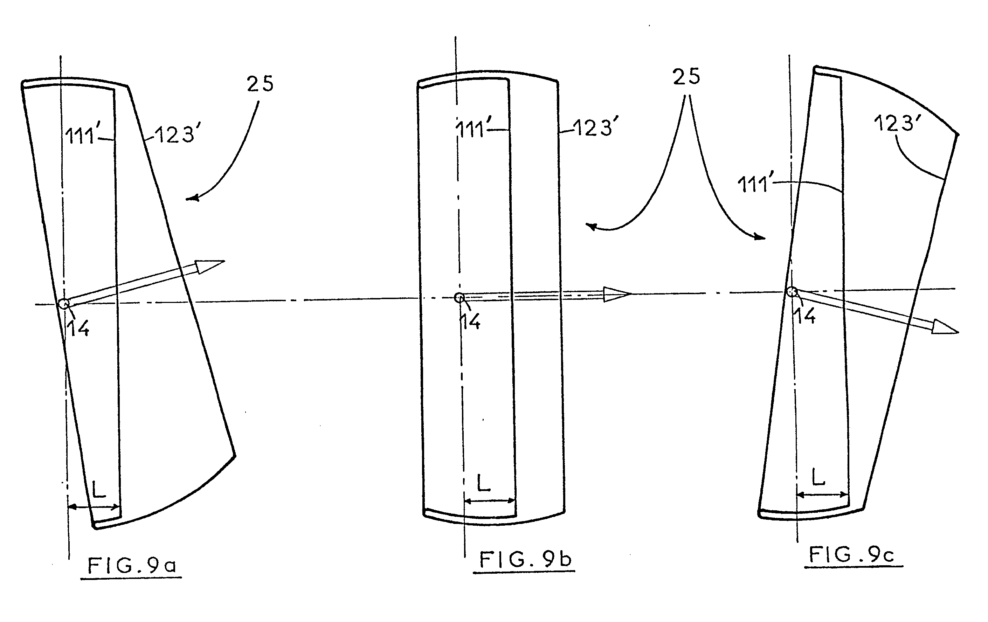

Les figures 9a, 9b, 9c, montrent respectivement les configurations prises par la moitié de la membrane annulaire d'étanchéité 25 lorsque la tuyère orientable est dans la position jet dérivé vers le haut, dans l'axe du propulseur, et dans la position jet dérivé vers le bas.

On a figuré en 14 le point de l'axe du propulseur autour duquel rotule la partie pivotante de la tuyère. On remarquera que la distance L de ce point au bord 111' solidaire de la partie fixe reste la même dans les trois configurations de déroulement de la membrane.

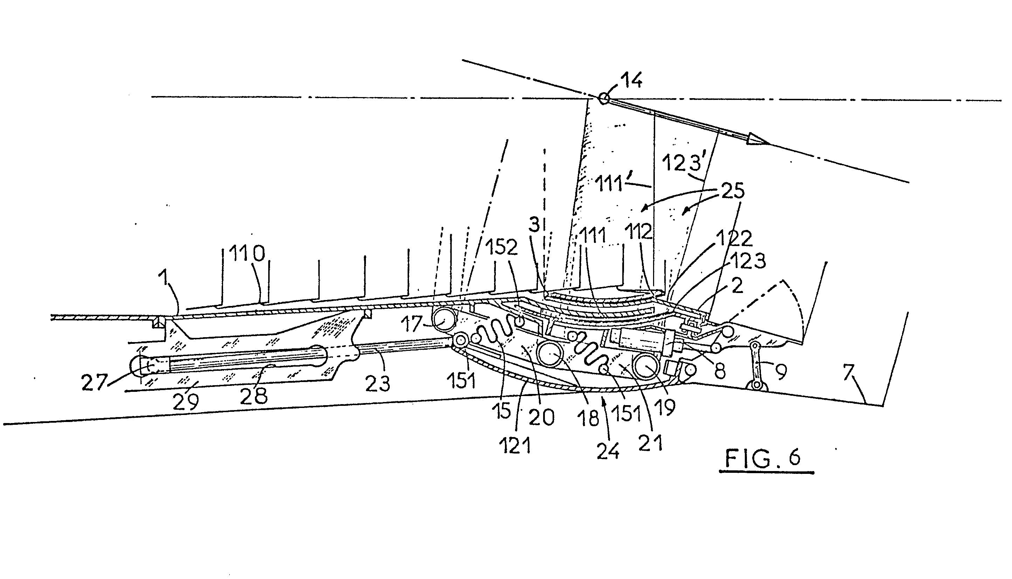

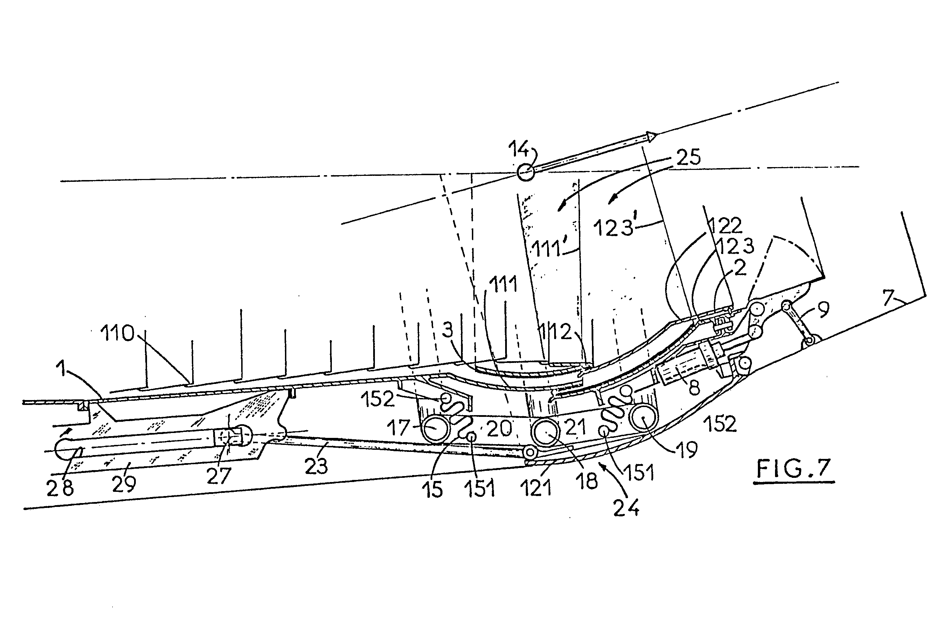

On voit également sur les configurations représentées aux figures 6 et 7 le déroulement de la membrane, représenté par la partie ombrés, lorsque la tuyère mobile est déviée vers le bas ou vers le haut.

Sur la vue en coupe transversale de la figure 8 qui passe dans un plan intermédiaire entre les anneaux 18 et 19, on voit que les joues de l'entretoise 21 de l'anneau intermédiaire de liaison ménagent des échancrures 26 en correspondance avec les intervalles séparant les éléments élastiques.

Des vérins 8 appartiennent à un dispositif de modification de la section de jets, à volets 7 et biellette 9, qui est d'un type analogue à celui qui a été décrit à propos du premier exemple de réalisation.

Les éléments élastiques sont placés dans un canal annulaire balayé par de l'air relativement frais. On prévoit, de manière connue pour la ventilation d'un canal de post-combustion, le choix judicieux de l'étage de compresseur sur lequel est prélevé cet air.

Bien entendu, la réalisation de l'anneau intermédiaire de liaison décrit n'est pas limitative. C'est ainsi qu'il pourrait comporter seulement deux anneaux tels que 17—19. Ces deux anneaux pourraient être solidarisés de manière démontable pour faciliter le changement des éléments élastiques. Cet élément intermédiaire de liaison pourrait enfin être utilisé dans une variante mettant en oeuvre des blocs lamifiés.

Les figures ne montrent que deux positions de la tuyère mobile correspondant à la déviation du jet vers le haut ou vers le bas. Les doubles ensembles disposés à 90° de ceux représentés permettent une déviation du jet vers la droite ou vers la gauche.

La combinaison des déplacements des vérins dans deux plans perpendiculaires permet l'orientation de la tuyère dans pratiquement n'importe quelle direction.

La tuyère orientable, selon l'invention, présente de nombreux avantages par rapport aux articulations mécaniques jusqu'à présent utilisées. C'est ainsi qu'elle est:

— moins chère par suite du petit nombre de pièces mobiles, de sa réalisation â partir de matériaux peu onéreux et de la facilité de remplacement des éléments élastiques;
— moins lourde, en moins de piéces, en matériau de faible densité,
— et plus fiable, il n'y a pas d'assemblages avec jeu et les matériaux lamifiés utilisés pour les éléments élastiques font appel à une technologie bien connue.

## Revendications

1. Tuyère orientable pour propulseur à réaction comportant une partie fixe (1), solidiare du propulseur sur laquelle s'articule une partie pivotante (2), des moyens d'étanchéité (3; 16) disposés entre les deux parties, des vérins de commande (4) de déplacement de la partie pivotante et un dispositif d'orientation multidirectionnelle comprenant des éléments élastiques séparés (10; 15) disposés entre la partie fixe (1) et la partie pivotante (2) de la tuyère, chaque élément élastique présentant deux extrémités d'extension sensiblement parallèles, caractérisé en ce que lesdits éléments élastiques séparés, dont la plus grande dimension s'étend sensiblement transversalement à l'axe du propulseur, sont disposés par paires au nombre d'au moins trois et uniformément réparties à la périphérie de la tuyère, une des extrémités des éléments élastiques de chaque paire étant solidaire d'un anneau de liaison intermédiaire (11, 24) indépendant des parties fixe et mobile, de l'autre extrémité de chacun des deux éléments élastiques de chaque paire étant fixée respectivement à la partie fixe et à la partie mobile de la tuyère, l'ensemble des paires d'éléments élastiques déterminant une articulation déformable constituée sensiblement par deux plans (I, II) d'éléments élastiques contenant leur dite plus grande dimension et dont le premier (I) est fixé sur la partie fixe (1) et le second (II) sur la partie pivotante (2) de la tuyère.

2. Tuyère orientable selon la revendication 1, caractérisée en ce que le dispositif d'orientation multidirectionnelle comporte au moins trois doubles ensembles de deux éléments élastiques (10), un vérin de commande (4) étant associé à chaque double ensemble et disposé dans un plan diamétral équidistant des ensembles.

3. Tuyère orientable selon la revendication 1 ou 2, caractérisée en ce que les éléments élastiques (10) sont constitués d'un empilage de feuilles d'élastomère et de métal adhérant les unes aux autres.

4. Tuyère orientable selon la revendication 3, caractérisée en ce que les éléments élastiques (10) sont constitués d'un lamifié caoutchouc/alliage léger, vulcanisé.

5. Tuyère orientable selon l'une des revendications précédentes, caractérisée en ce que les éléments élastiques (10) présentent selon un plan perpendiculaire à l'axe du propulseur, une forme en portion de secteur cylindrique.

6. Tuyère orientable selon l'une des revendications précédentes, caractérisée en ce que les axes de chaque élément d'un ensemble se coupent en un point situé à l'intérieur de la tuyère, sur l'axe du propulseur.

7. Tuyère orientable selon la revendication 1 ou 2, caractérisée en ce que les éléments élastiques sont constitués par des lames métalliques ondulées (15).

8. Tuyère orientable selon l'une des revendications précédentes, caractérisée en ce que l'anneau intermédiaire de liaison (24) présente la forme d'une cage d'écureuil constituée au moins par deux anneaux (17, 18, 19) dont les plans sont sensiblement perpendiculaires à l'axe du propulseur et reliés par des entretoises (20, 21) uniformément réparties à leur périphérie.

9. Tuyère orientable selon l'une des revendications précédentes, caractérisée en ce que les moyens d'étanchéité sont constitués au moins d'une bague (3) présentant une face sphérique disposée au pourtour de l'extrémité de la partie fixe et coopérant avec la partie (12) pivotante et sphérique de la tuyère, les parties coopérantes ayant les mêmes rayon et centre de courbure.

10. Tuyère orientable selon l'une des revendications précédentes, caractérisé en ce que les moyens d'étanchéité sont constitués d'au moins une membrane souple (25) fixée entre les bords (111, 123) des parties fixe (1) et pivotante (2) de la tuyère.

## Patentansprüche

1. Schwenkbare Schubdüse für Strahlantrieb, mit einem feststehenden Teil (1), der mit dem Triebwerk fest verbunden ist und an dem ein schwenkbarer Teil (2) angelenkt ist, einer zwischen diesen Teilen befindlichen Dichtungseinrichtung (3; 16), Betätigungszylindern (4) zum Verlagern des schwenkbaren Teils und einer in mehrere Richtungen schwenkbaren Vorrichtung, die getrennte elastische Glieder (10; 15) aufweist, die sich zwischen dem feststehenden Teil (1) und dem schwenkbaren Teil (2) der Schubdüse erstrecken, wobei jedes elastische Glied zwei im wesentlichen parallele Dehnungsenden besitzt, dadurch gekennzeichnet, daß die getrennten elastischen Glieder, deren größte Ausdehnung im wesentlichen quer zu Triebwerksachse verläuft, als mindestens drei Pàare gleichmâig verteilt über die Umrißlinie der Schubdüse angeordnet sind, daß eines der Enden der elastischen Glieder eines jeden Paares mit einem Verbindungszwischenring (11, 24), der unabhängig von dem feststehenden und dem beweglichen Teil ist, fest verbunden ist, während das andere Ende jedes der beiden elastischen Glieder eines jeden Paares an dem jeweils zugeordneten feststehenden und beweglichen Teil der Schubdüse befestigt ist, daß die Gesamtheit der Paare der elastischen Glieder ein verformbares Gelenk bestimmt, das im wesentlichen durch zwei Ebenen (I, II) von elastischen Gliedern gebildet ist, die ihre genannte größte Ausdehnung enthalten und von denen die erste Ebene (I) an dem feststehenden Teil (1) und die zweite Ebene (II) an dem beweglichen Teil (2) der Schubdüse befestigt ist.

2. Schwenkbare Schubdüse nach Anspruch 1, dadurch gekennzeichnet, daß die in mehrere Richtungen schwenkbare Vorrichtung mindestens drei Zweiergruppen aus zwei elastischen Gliedern (10) aufweist, und daß jeder Zweiergruppe ein Betätigungszylinder (4) zugeordnet und in einer Durchmesserebenen der äquidistanten Gruppen angeordnet ist.

3. Schwenkbare Schubdüse nach Anspruch 1 oder 2, dadurch gekennzeichnet, daß die elastischen Glieder (10) aus einem Stapel von miteinander verklebten Elastomerfolien und Metallfolien gebildet sind.

4. Schwenkbare Schubdüse nach Anspruch 3, dadurch gekennzeichnet, daß die elastischen Glieder (10) schichtweise aus Kautschuk und Leichtmetall aufgebaut und vulkanisiert sind.

5. Schwenkbare Schubdüse nach einem der vorhergehenden Ansprüche, dadurch gekennzeichnet, daß die elastischen Glieder (10) in einer senkrecht auf der Triebwerksachse stehenden Ebene die Form eines Zylinderausschnitts bilden.

6. Schwenkbare Schubdüse nach einem der vorhergehenden Ansprüche, dadurch gekennzeichnet, daß die Achsen jedes Gliedes einer Gruppe sich in einem Punkte schneiden, der im Inneren der Schubdüse auf der Triebwerksachse liegen.

7. Schwenkbare Schubdüse nach Anspruch 1 oder 2, dadurch gekennzeichnet, daß die elastischen Glieder aus gewellten Metallstreifen (15) bestehen.

8. Schwenkbare Schubdüse nach einem der vorhergehenden Ansprüche, dadurch gekennzeichnet, daß der Verbindungszwischenring (24) die Form eines Käfigankers hat und aus mindestens zwei Ringen (17, 18, 19) gebildet ist, deren Ebenen praktisch senkrecht auf der Triebwerksachse stehen und die untereinander durch Stege (20, 21) verbunden sind, die über ihren Umfang gleichmäßig verteilt sind.

9. Schwenkbare Schubdüse nach einem der vorhergehenden Ansprüche, dadurch gekennzeichnet, daß die Abdichtungseinrichtung aus mindestens einem Ring (3) besteht, der eine sphärische Fläche aufweist, die um den äußeren Umfang des Endes des feststehenden Teils (1) verläuft und mit den schwenkbaren und sphärischen Teil (12) der Schubdüse zusammenwirkt, wobei die zusammenwirkenden Teile gleichen Radius und gleichen Krümmungsmittelpunkt haben.

10. Schwenkbare Schubdüse nach einem der vorhergehenden Ansprüche, dadurch gekennzeichnet, daß die Abdichtungseinrichtung aus mindestens einer nachgiebigen Membran (25) besteht, die an den Rändern (111, 123) des feststehenden Teils (1) und des schwenkbaren Teils (2) der Schubdüse befestigt ist.

**Claims**

1. Swivelling nozzle for a jet propulsion engine comprising a fixed part (1), rigid with the engine on which a pivotal part swivels (2), fluidtight means (3; 16) disposed between the two parts, control actuators (4) for displacing the pivotal part and a multi-directional orientation device comprising separate resilient members (10; 15) disposed between the fixed part (1) and the pivotal part (2) of the nozzle, each resilient member having two substantially parallel extension end portions characterised in this that the said resilient separate members, of which the largest dimension extends substantially transversely to the axis of the jet engine, are disposed in pairs, at least three in number, uniformly distributed around the periphery of the nozzle, one of the ends of the resilient members of each pair being rigid with an intermediate connecting ring (11; 24) independent of the fixed and movable parts, the other end of each of the two resilient members of each pair being secured respectively to the fixed part and to the movable part of the nozzle, the assembly of pairs of resilient members defining a substantial swivelling action constituted substantially by two planes (I, II) of the resilient members containing their said largest dimension and of which the first (I) is secured on the fixed part (1) and the second (II) on the pivotal part (2) of the nozzle.

2. Swivel nozzle according to claim 1, characterised in this that the multi-directional orientation device comprises at least three double assemblies of two resilient members (10), a control actuator (4) being associated with each double assembly and disposed in a diametrial plane equidistant from the assemblies.

3. Swivel nozzle according to claim 1 or 2, characterised in this that the resilient members (10) are constituted by a stack of leaves of an elastometer and of metal adhering the ones to the others.

4. Swivel nozzle according to claim 3, characterised in this that the resilient members (10) are constituted by a vulcanized laminate of rubber/light alloy.

5. Swivel nozzle according to one of the preceding claims, characterised in this that the resilient members (10) have on a plane perpendicular to the axis of the jet engine, a shape in the form of a portion of a cylindrical sector.

6. Swivel nozzle according to one of the preceding claims, characterised in this that the axes of each element of an assembly intersect at a point situated within the nozzle, on the axis of the jet engine.

7. Swivel nozzle according to claim 1 or 2, characterised in this that the resilient elements are constituted by corrugated metallic sheets (15).

8. Swivel nozzle according to one of the preceding claims, characterised in this that the intermediate connecting ring (24) has the shape in the form of a squirrel cage constituted by at least two rings (17, 18, 19) of which the planes are substantially perpendicular to the axis of the jet engine and connected by crosspieces (20, 21) uniformly distributed around their periphery.

9. Swivel nozzle according to one of the preceding claims, characterised in this that the fluid-tight means are constituted by at least one ring (3) having a spherical face disposed at the periphery of the end of the fixed part and cooperating with the pivotal and spherical part (12) of the nozzle, the cooperating parts having the same radius and centre of curvature.

10. Swivel nozzle according to one of the preceding claims, characterised in this that the fluid-tight means are constituted by at least one flexible membrane (25) secured to the edges (111, 123) of the fixed parts (1) and pivotal parts (2) of the nozzle.

FIG.:1

0029 773

FIG.: 2

0029773

FIG.:3

FIG.:4

6   5

13

0029773

FIG. 5

FIG. 6

FIG.7

FIG.8

0029773

FIG.9a    FIG.9b    FIG.9c